(19) Europäisches Patentamt
European Patent Office
Office européen des brevets

(11) Veröffentlichungsnummer: **0 418 798 B1**

(12) **EUROPÄISCHE PATENTSCHRIFT**

(45) Veröffentlichungstag der Patentschrift: **27.07.94**

(51) Int. Cl.5: **G01N 33/00**, G01N 31/00

(21) Anmeldenummer: **90117897.0**

(22) Anmeldetag: **18.09.90**

(54) **Verfahren und Gerät zur Bestimmung der wasserlöslichen Oxidantien in Luft.**

(30) Priorität: **19.09.89 DE 3931193**

(43) Veröffentlichungstag der Anmeldung:
**27.03.91 Patentblatt 91/13**

(45) Bekanntmachung des Hinweises auf die
Patenterteilung:
**27.07.94 Patentblatt 94/30**

(84) Benannte Vertragsstaaten:
**CH FR GB LI**

(56) Entgegenhaltungen:
**US-A- 3 795 589**
**US-A- 4 427 772**

**PATENT ABSTRACT OF JAPAN, Band 10, Nr.
190 (P-474), 04 Juli 1986&NUM;**

(73) Patentinhaber: **FORSCHUNGSZENTRUM JÜ-
LICH GMBH**
**Wilhelm-Johnen-Strasse**
**D-52425 Jülich(DE)**

(72) Erfinder: **Kley, Dieter, Prof.Dr.**
**Max-Planck-Strasse 10**
**W-5170 Jülich(DE)**
Erfinder: **Gilge, Stefan**
**Gracht 14**
**W-5190 Stolberg-Gressenich(DE)**
Erfinder: **Jeftic, Jelena**
**M.Kovacevica 9**
**YU-41020 Zagreb(YU)**
Erfinder: **Volz-Thomas, Andreas, Dr.**
**Am Kammerbusch 16**
**W-5140 Erkelenz-Hetzerath(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur BeStimmung der wasserlöslichen Oxidantien in Luft, bei dem die zu analysierende Luftmenge zur Aufnahme der Oxidantien, insbesondere $H_2O_2$, über eine Stripperflüssigkeit, wie Wasser, geleitet wird. Die Erfindung bezieht sich ferner auf ein Gerät zur Bestimmung von wasserlöslichen Oxidantien in Luft, bei dem die zu analysierende Luft über eine Stripperflüssigkeit geleitet und darin die Oxidantien aufgenommen werden.

Atmosphärische Spurenstoffanalytik gewinnt mit der immer problematischer werdenden Luftverschmutzung zunehmend an Bedeutung. Die Untersuchungen sind dabei auch auf die in der Luft vorhandenen wasserlöslichen Oxidantien gerichtet. Deren wichtigste Komponente ist Wasserstoffperoxid, die in höheren Konzentrationen als die anderen wasserlöslichen Oxidantien vorkommt, so daß es sich bei deren Bestimmung praktisch um eine Bestimmung des Wasserstoffperoxids handelt.

Eine Vorrichtung zur Bestimmung von $H_2O_2$ ist in der US-Patentschrift 4,427,772 beschrieben. Das Gerät wird dort allerdings zur Bestimmung der $H_2O_2$-Konzentration in Flüssigkeiten eingesetzt, wobei das dafür verwendete Meßsystem für die Bestimmung des in der Atmosphäre nur in Spuren vorkommenden Wasserstoffperoxids zu unempfindlich ist. Des weiteren erfolgt der Nachweis an $H_2O_2$ dort ausschließlich mit $H_2O_2$-spezifischer Katalase, so daß weitere, in Proben enthaltene wasserlösliche Oxidantien nicht miterfaßt werden.

Um die Spurenstoffe in der Atmosphäre bestimmen und überwachen zu können, kommt es des weiteren nicht nur darauf an, daß die Meßverfahren hinreichend empfindlich bzw. genau sind. Sie sollen vielmehr auch, um ihren kostengünstigen Einsatz beispielsweise in Meßfahrzeugen zu ermöglichen, einfach sein bzw. mit einfachem Gerät durchführbar sein. Dies gilt unter anderem auch für Untersuchungen in höheren Bereichen der Atmosphäre, bei denen es wünschenswert ist, das Meßgerät als Ballonsonde einsetzen zu können.

Die derzeit bekannten Meßverfahren zur Bestimmung von Oxidantien erfordern jedoch bei deren Anwendung in der atmosphärischen Spurenstoffanalytik relativ schwere und insbesondere auch komplizierte Geräte, wie beispielsweise bei der in der US-Patentschrift 3,795,589 beschriebenen elektrochemischen Nachweismethode. Für dessen Einsatz zur Bestimmung von Oxidantien in Luft würde eine aufwendige elektronische Regelung benötigt, um die bei der atmosphärischen Spurenstoffanalytik unter Anwendung dieser Methode auftretenden geringen elektrischen Ströme hinreichend genau messen zu können. Zudem würden bei Anwendung des dort beschriebenen Meßverfahrens in der atmosphärischen Spurenstoffanalyse die sehr geringen $H_2O_2$- bzw. Oxidantienkonzentrationsmeßwerte von den bei dieser Methode mitbestimmten, vergleichsweise hohen Ozonkonzentrationsmeßwerten überdeckt; eine genaue Bestimmung des Oxidantiengehaltes in der Luft wäre deshalb nicht möglich.

Es ist daher Aufgabe der Erfindung, ein Meßverfahren der eingangs bezeichneten Art zu schaffen, das einfach und dennoch hinreichend genau ist und das die Verwendung eines einfachen und kostengünstigen Gerätes erlaubt. Es ist ferner Aufgabe der Erfindung, ein solches Gerät zu schaffen.

Diese Aufgabe wird erfindungsgemäß bei einem Verfahren der eingangs bezeichneten Art dadurch gelöst, daß die die Oxidantien enthaltende Flüssigkeit sodann mit einer Jodid enthaltenden Flüssigkeit vermischt wird, in der die Oxidantien unter Einsatz eines Katalysators mit dem Jodid zu $J_2$ reagieren, worauf die die Reaktionsprodukte enthaltende Lösung einer im Durchfluß betriebenen elektrochemischen Konzentrationskette mit nachgeschaltetem Strommeßgerät zugeführt wird, in der die die Reaktionsprodukte enthaltende Lösung die Kathodenlösung und eine konzentrierte Jodid-Lösung die Anodenlösung ist, und mittels der die Menge an entstandenem Jod und somit - unter Berücksichtigung der Menge der zu analysierenden Luft - die Konzentration an Oxidantien bestimmt und angezeigt wird.

Die zu analysierende Luft wird zunächst in bekannter Weise über eine Stripperflüssigkeit geleitet, wozu beispielsweise eine Sammelspirale eingesetzt werden kann. Diese ist so zu bemessen, daß die wasserlöslichen Oxidantien praktisch vollständig (zu 99 %) von der Flüssigkeit aufgenommen werden. Die wasserlöslichen Oxidantien werden dabei von anderen nicht in Wasser löslichen Oxidantien abgetrennt, beispielsweise unter Verwendung eines Gasabscheiders.

So wird beispielsweise das Ozon, das sicherlich den größten Anteil an oxidierenden Spurengasen in der Atmosphäre ausmacht, in einer Stripperflüssigkeit nur zu einem vernachlässigbar kleinen Teil aufgenommen:

Bei einer $H_2O_2$-Konzentration von 1 ppb in der Luft, einer Ansaugleistung von 6 l/min, und einem Stripperfluß von $5,7 \times 10^{-4}$ l/min, erreicht man bei nahezu 100 %iger Sammeleffizienz eine $H_2O_2$-Konzentration in der Stripperlösung von:

$$(6 \text{ l/min} / 22,4 \text{ l/mol}) \times 10^{-9} \times 1,75 \times 10^3 \text{ min/l} = 4,7 \times 10^{-7} \text{ mol/l}$$

Demgegenüber erreicht man selbst bei vergleichsweise hohen Ozonkonzentrationen von 100 ppb und maximaler Anreicherung (Gleichgewicht mit Henrykonstante von $H = 1,1 \times 10^{-2}$ mol/l wird erreicht) nur eine Konzentration von:

$100 \times 10^{-9}$ bar x $1,1 \times 10^{-2}$ mol x $l^{-1}bar^{-1}$ = $1,1 \times 10^{-9}$ mol/l

d h. nur ca. 2 ‰ des Meßwertes wird vom Ozon verursacht.

Die Interferenz durch störende Reduktantien sollte ebenfalls ausgeschaltet werden. Sofern sie nicht oder nur schlecht löslich sind, geschieht das wie oben durch Abtrennung. Schwefeldioxid als wichtigstes Beispiel zu störenden Reduktantien ist allerdings in neutralen Lösungen gut löslich. Säuert man die Stripperlösung an, wird die Löslichkeit zwar schlechter, aber die Abreaktion von schon gesammeltem $H_2O_2$ mit $SO_2$ in der Stripperspirale wird sehr schnell, so daß ständig $SO_2$ wegreagiert und neues aus der Luft aufgenommen werden kann. Erst bei pH-Werten kleiner 1 wird diese Reaktion wieder langsamer. In dem Falle, daß die $SO_2$-Konzentration die zu erwartende $H_2O_2$-Konzentration übersteigt, nimmt man als Stripperflüssigkeit statt Wasser eine 1 normale starke Säure, d. h. man setzt eine auf einen pH-Wert von wenigstens 0,1 angesäuerte Stripperflussigkeit ein. So kann man die $SO_2$-Interferenz nahezu ausschalten.

Sie wird dann nach dem Sammeln der Oxidantien, aber vor dem Vermischen mit der das Jodid enthaltenden Flüssigkeit, neutralisiert.

Um das Verfahren mit hinreichend zeitlicher Auflösung betreiben zu können, werden zweckmäßigerweise Übergangsmetallkomplexe als Katalysatoren eingesetzt, die die Reaktion $H_2O_2$ + $I^-$ --> $I_2$ hinreichend beschleunigen. Solche Metallkomplexe sind Salze von Mo (VI), Fe (III), Zr (IV), W (VI), Ce (III), Hf (IV), V (IV), V (V), Nb (V), Ta (V), Ru (IV), Ru (III), Os (VIII) und Ti (IV). Von diesen haben sich Molybdän-VI-Salze als Katalysatoren als besonders geeignet erwiesen.

Zum Nachweis des in der Reaktion entstandenen Jods bedient man sich zweckmäßigerweise einer im Durchfluß betriebenen Konzentrationskette. Als Kathodenlösung fungiert die die Reaktionsprodukte enthaltende Lösung. Sie ist ca. 0.05 molar an Jodid. Die Anodenlösung ist zweckmäßigerweise eine konzentrierte bzw. gesättigte Kaliumjodidlösung, die ca. 8.0 Molar an Jodid ist. Zwischen Kathoden- und Anodenraum stellt sich zunächst, d. h. vor der Messung, ein Gleichgewicht ein, das durch das Konzentrationsverhältnis von Jodid zu Jod bestimmt wird. Wird nun während der Durchführung des Verfahrens dem Kathodenraum ein Reaktionsgemisch zugeführt, das Jod enthält, dann wird das Gleichgewicht verändert und es fließt so lange ein elektrische Strom, bis das Gleichgewicht wieder aufgebaut ist. Dieser Strom ist dem Jod bzw. der oxidierten Menge an Jodid und damit der Konzentration der Oxidantien direkt proportional.

Die Strommessung erfolgt zweckmäßigerweise über ein Elektrometer. Sie liegt im Bereich von einigen $10^{-8}$ (Nullstrom) bis $10^{-5}$ (Signal) Ampere, ist also unkritisch.

Die Stromdaten können selbstverständlich von einem Rechner aufgenommen und weiterverarbeitet werden.

Die Aufgabe gemäß der Erfindung wird ferner durch ein Gerät der eingangs bezeichneten Art gelöst, mit einer ersten Stufe, bestehend aus zur Aufnahme der zu analysierenden Luft vorgesehenen Sammelspirale, der über eine Pumpeinrichtung ein Gefäß mit Stripperflüssigkeit vorgeschaltet ist und der ein Gasabscheider und diesem wiederum über eine Rührzelle ein Gefäß mit Neutralisationslösung nachgeschaltet ist, mit einer zweiten Stufe, bestehend aus einer der ersten Stufe nachgeschalteten zweiten Rührzelle, der ein Gefäß mit jodidhaltiger Lösung zugeschaltet ist, einer der zweiten Rührzelle nachgeschalteten Reaktionsspirale mit nachgeschaltetem zweiten Gasabscheider, und mit einer dritten Stufe, bestehend aus einer elektrochemischen Konzentrationskette und dieser nachgeschaltetem Elektrometer. Das Gerät ermöglicht, das Verfahren im Durchfluß zu betreiben.

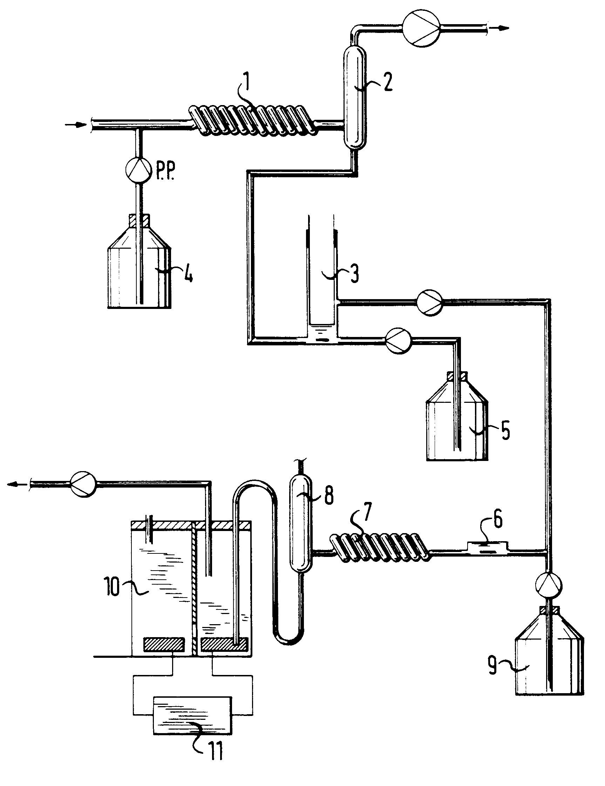

Das Gerät ist in der Zeichnung schematisch dargestellt und wird im folgenden näher erläutert:
Die erste Stufe umfaßt die Sammelspirale 1, den nachgeschalteten Gasabscheider 2 und die Rührzelle 3 sowie die angeschlossenen Gefäße 4 und 5.

Die zu analysierende Luft gelangt in die Sammelspirale 1, wo sie von Stripperflüssigkeit, die aus dem Gefäß 4 eingespeist wird, aufgenommen wird. Während die Luft über den Gasabscheider 2 zur Abluft gelangt, fließt die durch die zu messenden Oxidantien angereicherte Stripperflüssigkeit in die Rührzelle 3, in die - falls erforderlich - aus dem Gefäß 5 Neutralisationslösung eingegeben wird. Zur Messung des pH-Wertes der Flüssigkeit bzw. zu dessen Kontrolle kann in die Rührzelle ggf. eine - in der Zeichnung nicht dargestellte - Glaselektrode eingeführt werden.

Die zweite Stufe umfaßt die Rührzelle 6, die Reaktionsspirale 7 mit nachgeschaltetem, zweitem Gasabscheider 8 sowie das Gefäß 9.

Von der Rührzelle 3 gelangt die Flüssigkeit über die Rührzelle 6 zur Reaktionsspirale 7. Sie wird dabei mit der jodidhaltigen Lösung aus dem Gefäß 9 vermischt. Nach Verlassen der Reaktionszelle werden im Gasabscheider 8 noch vorhandene Gasblasen abgetrennt. Diese Gasblasen werden absichtlich mitgeführt, um in der Reaktionsspirale die Lösung zu separieren und somit eine Verringerung der Auflösung durch Rückdiffusion zu verhindern.

Die dritte Stufe umfaßt die elektrochemische Konzentrationskette bzw. Zelle 10 (ECC: Electro Chemical Concentration Cell) mit zwei in die jeweiligen Lösungen des Kathoden- und Anodenraums eingetauchte Pt-Elektroden sowie das nachgeschaltete Elektrometer 11.

Sämtliche Flüssigkeiten werden durch eine Kassettenschlauchpumpe (P.P. ist eine Abkürzung für PeristaltikPumpe) gefördert, wobei die Fördermenge durch Wahl der Drehzahl der Pumpe, der Durchmesser der Schläuche und deren Anpreßdruck optimiert werden kann.

Mit dem beschriebenen Gerät kann das Verfahren beispielsweise wie folgt durchgeführt werden:

a) Sammelvorgang (1. Stufe)

Bei einer $H_2O_2$-Konzentration von 1 ppb in Luft, einer Ansaugleistung von 6 l/min und einem Stripperfluß von $5.7 \times 10^{-4}$ l/min erreicht man eine $H_2O_2$-Konzentration in der Stripperlösung von

$(6\ lmin^{-1}\ /\ 22,4\ l \times mol^{-1}) \times 10^{-9} \times 1,75 \times 10^3$ min/l
$= 4.7 \times 10^{-7}$ mol $\times l^{-1}$

Für den Fall, daß eine $SO_2$-Konzentration von 10 ppb in der zu analysierende Luft vorliegt, ergeben sich folgende Daten:
1 ppb $H_2O_2$; 10 ppb $SO_2$; pH = 0,1
$SO_2$-Konzentration in Lösung: $[S_{(IV)}]_{lsg} = H_{S(IV)} \times [SO_2]_{luft}$

$H_{S(IV)} = H_{SO2} (1 + K_1/[H^+] + K_1 \times K_2/[H^+]^2)$
$K_1 = 1,74 \times 10^{-2}$ mol/l
$K_2 = 6,24 \times 10^{-8}$ mol/l
$H_{SO2} = 1,24$ mol/l $\times$ bar
$ = =>\ [S_{(IV)}]_{lsg} = 1,24$ mol/l $\times$ bar 10 $\times 10^{-9}$ bar = 1,3 $10^{-8}$ mol/l

Abreaktion: $d\ (S_{(IV)})/dt = 8,3 \times 10^4\ [H_2O_2]\ [SO_2\ _{aq}]$
$(0,1 + [H^+])^{-1}$ (für pH O-2)
$H_2O_2$-Konzentration: wie oben $(4,7 \times 10^{-7}$ mol/l)
Aufenthaltszeit Lösung in Spirale: 20.8 Sekunden

$ = =>\ d\ (S_{(IV)})/dt = 5,41 \times 10^{-10}$ mol/l $\times$ sek
$[S_{(IV)}]_{abreag} = 1,1 \times 10^{-8}$ mol/l
$ = =>$ insgesamt $2,4 \times 10^{-8}$ mol/l $S_{(IV)}$ in Lösung

Dies bedeutet, daß ca. 5 % der $H_2O_2$-Menge durch $SO_2$ dem Nachweis entzogen wird.

Die gasförmige und die flüssige Phase werden sodann voneinander im Gasabscheider 2 getrennt.

b) Chemische Umwandlung

In der Rührzelle 2 wird die mit $H_2O_2$ beladene Stripperflüssigkeit mit der sog. Konditionierungslösung, bestehend aus Kaliumiodid (KI), Dinatriumhydrogenphosphat ($Na_2HPO_4 \times 12\ H_2O$) und Ammoniumheptamolybdat (($NH_4)_6\ Mo_7O_{24} \times 4\ H_2O$) in bestimmten Konzentrationsverhältnissen (z. B.: KI 0,48 mol/l; $Na_2HPO_4$ 0,11 mol/l; $(NH_4)_6Mo_7O_{24}$ 6,5 $\times 10^{-3}$mol/l) in Wasser gelöst vermischt.

In der Reaktionsspirale 7 reagiert dann das $H_2O_2$ quantitativ mit dem KI zu $I_2$ ab. Dabei wirkt das Ammoniumheptamolybdat als Katalysator, indem es die Reaktionszeit wesentlich verkürzt. Wahrscheinlich treten dabei $H_2O_2$-Moleküle und $I^-$-Ionen in die Ligandensphäre des Molybdäns ein und reagieren dort "intramolekular" ab.

c) Elektrochemischer Nachweis

Die die Reaktionsprodukte enthaltende Lösung wird als Kathodenlösung in die Zelle 10 eingespeist. Sie ist ca. 0,05 molar an Jodid. Die Anodenlösung ist ca. 8,0 molar an Kaliumjodid. Die beiden Kammern sind durch eine Salzbrücke miteinander verbunden. Die Elektromotorische Kraft (EMK) wird durch die Konzentrationsverhältnisse von Jodid zu Jod bestimmt:

EMK $= -0,059/2 \times \log\ (a_1)I_3^- \times (a_3)^2\ I^- \times [(a_4)I_2 \times (a_2)^3I^-]^{-1}$

$a_1$ und $a_2$ sind die Aktivitäten der $I_2$ (bzw. $I_3^-$) und $I^-$-Ionenkonzentrationen in der Anodenkammer; $a_3$ und $a_4$ die der $I^-$ und $I_2$-Konzentration in der Kathodenkammer. Verbindet man jetzt die beiden Elektroden z. B. über das Elektrometer 11, fließt solange ein Strom und die miteinander korrespondierenden Aktivitäten ändern sich solange, bis die Gleichgewichtsbedingung:

$\beta = (a_1) \times (a_3)^2\ /\ (a_4) \times (a_2)^3 \approx 1$

erfüllt ist. In diesem Gleichgewicht arbeitet die Zelle. Wird jetzt durch $H_2O_2$ das Verhältnis von $I^-$ zu $I_2$ zugunsten des $I_2$ verändert, wird $\beta$ kleiner 1 und es fließt ein meßbarer elektrischer Strom, da die Zelle nach:

$3\ I^-\ (a_2) + I_2\ (a_4) \dashrightarrow I_3^-\ (a_1) + 2\ I^-\ (a_3)$

das Gleichgewicht wieder aufbaut. Dieser Strom ist der oxidierten Menge Jodid und damit der Wasserstoffperoxidkonzentration direkt proportional.

Mit dem Meßverfahren wurde bisher eine Genauigkeit von ca. 0,1 ppb und eine zeitliche Auflösung von ca. 2 Minuten erreicht.

Das Verfahren mißt die Summe der wasserlöslichen Oxidantien und unterscheidet somit nicht zwischen $H_2O_2$ und organischen Peroxiden. Da aber meistens die organischen Peroxide gegenüber $H_2O_2$ in wesentlich kleineren Konzentrationen vorkommen, ist das Fehlen dieser Unterscheidung für die Interpretation der Daten nicht entscheidend.

## Patentansprüche

1. Verfahren zur Bestimmung der wasserlöslichen Oxidantien in Luft, bei dem die zu analysierende Luftmenge zur Aufnahme der Oxidantien, insbesondere $H_2O_2$, über eine Stripperflüssigkeit, wie Wasser, geleitet wird,
**dadurch gekennzeichnet,**
daß die die Oxidantien enthaltende Flüssigkeit sodann mit einer Jodid enthaltenden Flüssigkeit vermischt wird, in der die Oxidantien unter Einsatz eines Katalysators mit dem Jodid zu $J_2$ reagieren, worauf die die Reaktionsprodukte enthaltende Lösung einer im Durchfluß betriebenen elektrochemischen Konzentrationskette (10) mit nachgeschaltetem Strommeßgerät (11) zugeführt wird, in der die die Reaktionsprodukte enthaltende Lösung die Kathodenlösung und eine konzentrierte Jodid-Lösung die Anodenlösung ist, und mittels der die Menge an entstandenem Jod und somit - unter Berücksichtigung der Menge der zu analysierenden Luft - die Konzentration an Oxidantien bestimmt und angezeigt wird.

2. Verfahren nach Anspruch 1,
**dadurch gekennzeichnet,**
daß eine auf einen pH-Wert von wenigstens 0,1 angesäuerte Stripperlösung eingesetzt wird, die vor dem Vermischen mit der das Jodid enthaltenden Flüssigkeit neutralisiert wird.

3. Verfahren nach Anspruch 1 oder 2,
**dadurch gekennzeichnet,**
daß als Katalysator ein Molybdän-VI-Salz eingesetzt wird.

4. Gerät zur Bestimmung von wasserlöslichen Oxidantien in Luft,
mit einer ersten Stufe, bestehend aus zur Aufnahme der zu analysierenden Luft vorgesehenen Sammelspirale (1), der über eine Pumpeinrichtung ein Gefäß (4) mit Stripperflüssigkeit vorgeschaltet ist und der ein Gasabscheider (2) und diesem wiederum über eine Rührzelle (3) ein Gefäß (5) mit Neutralisationslösung nachgeschaltet ist,
mit einer zweiten Stufe, bestehend aus einer der ersten Stufe nachgeschalteten zweiten Rührzelle (6), der ein Gefäß (9) mit jodidhaltiger Lösung zugeschaltet ist, einer der zweiten Rührzelle (6) nachgeschalteten Reaktionsspirale (7) mit nachgeschaltetem zweiten Gasabscheider (8), und
mit einer dritten Stufe, bestehend aus einer elektrochemischen Konzentrationskette (10) und dieser nachgeschaltetem Elektrometer (11).

## Claims

1. A method of determining water-soluble oxidants in air, wherein the amount of air to be analysed is passed over a stripper liquid such as water, for the absorption of the oxidants, particularly $H_2O_2$, characterised in that the liquid which contains the oxidants is then mixed with a liquid which contains iodide in which the oxidants react with the iodide, with the use of a catalyst, to form $I_2$, whereupon the solution containing the reaction products is fed to an electrochemical concentration train (10) operated as a flow system, downstream of which a current measuring instrument (11) is disposed in which the solution containing the reaction products is the cathode solution and a concentrated iodide solution is the anode solution, and by means of which the amount of iodine produced and thus - taking into account the amount of air to be analysed - the concentration of oxidants is determined and indicated.

2. A method according to claim 1, characterised in that a stripper solution is used which is acidified to a pH value of at least 0,1 and which is neutralised before mixing with the liquid which contains iodide.

3. A method according to claim 1 or 2, characterised in that a molybdenum (VI) salt is used as the catalyst.

4. An apparatus for determining water-soluble oxidants in air, having a first stage consisting of a collector spiral (1) which is provided for receiving the air to be analysed, upstream of which a vessel (4) with stripper liquid is connected via a pump device, and downstream of which a gas separator (2) is connected, a vessel (5) with neutralisation solution being in turn connected downstream of the gas separator via a stirred cell (3), having a second stage consisting of a second stirred cell (6) connected downstream of the first stage and to which a vessel (9) with iodide-containing solution is connected, and a raction spiral (7) connected downstream of the second stirred cell (6), a second gas separator (8) being connected downstream of the reaction spiral, and having a third stage consisting of an electrochemical concentration train (10) and an electrometer (11) connected downstream of the latter.

**Revendications**

1. Procédé pour la détermination dans l'air des oxydants solubles dans l'eau, dans lequel la quantité d'air à analyser pour l'absorption des oxydants, en particulier $H_2O_2$, est amenée sur un liquide de lavage, comme l'eau, caractérisé en ce que le liquide contenant les oxydants est mélangé ensuite avec un liquide contenant de l'iodure, dans lequel les oxydants réagissent avec l'iodure, en présence d'un catalyseur, pour former $I_2$, après quoi la solution contenant les produits de réaction est amenée a' une chaîne de concentration (10) électrochimique actionnée en étant parcourue par un courant, comportant un appareil de mesure du courant (11) monté en aval, où la solution contenant les produits de réaction est la solution cathodique, et une solution concentrée d'iodure est la solution anodique, et au moyen de laquelle la quantité d'iode formé, et donc, en prenant en considération la quantité d'air à analyser, la concentration des oxydants est déterminée et affichée.

2. Procédé selon la revendication 1, caractérisé en ce qu'on utilise une solution de lavage acidifiée à un pH d'au moins 0,1, qu'on neutralise avant de la mélanger avec la solution contenant l'iodure.

3. Procédé selon la revendication 1 ou 2, caractérisé en ce qu'on utilise, comme catalyseur, un sel de molybdène-VI.

4. Appareil pour la détermination dans l'air des oxydants solubles dans l'eau, avec un premier étage constitué d'une spirale collectrice (1) prévue pour recevoir l'air à analyser, à l'avant de laquelle est monté un récipient (4) avec un liquide de lavage, par l'intermédiaire d'un dispositif de pompage, et à l'arrière de laquelle est monté un séparateur de gaz (2), lui-même suivi d'un récipient (5) contenant une solution de neutralisation, par l'intermédiaire d'une cellule à agitation (3), avec un deuxième étage constitué d'une deuxième cellule à agitation (6) montée en aval du premier étage, à laquelle est raccordé un récipient (9) avec une solution contenant un iodure, d'une deuxième spirale de réaction (7) montée en aval de la deuxième cellule à agitation (6), suivie d'un deuxième séparateur de gaz (8), et avec un troisième étage constitué d'une chaîne de concentration (10) électrochimique, suivie d'un électromètre (11).